# EUROPÄISCHE PATENTSCHRIFT

(11) **EP 1 200 534 B1**
(45) Veröffentlichungstag und Bekanntmachung des Hinweises auf die Patenterteilung: **19.10.2005**
(21) Anmeldenummer: 00958346.9
(22) Anmeldetag: 01.08.2000
(51) Int. Cl.: C09K 3/10

(54) **ABDICHTMASSE UND VERFAHREN ZUR HERSTELLUNG EINER ABDICHTUNG**
SEALING MATERIAL AND SEALING METHOD
MATIERE D'ETANCHEITE ET PROCEDE POUR REALISER UNE ETANCHEIFICATION

(30) Priorität: 02.08.1999 DE 19935583; 16.09.1999 DE 19944387
(43) Veröffentlichungstag der Anmeldung: 02.05.2002
(73) Patentinhaber: Illbruck GmbH, 51381 Leverkusen (DE)
(72) Erfinder: IRRGEHER, Fritz, 51381 Leverkusen (DE); KRAMLER, Karl, 92421 Schwandorf (DE)
(74) Vertreter: Müller, Enno
(86) Internationale Anmeldenummer: PCT/EP2000/007436
(87) Internationale Veröffentlichungsnummer: WO 2001/009264

(56) Entgegenhaltungen:
- EP-A- 0 504 630
- EP-A- 0 615 008

## Beschreibung

Die Erfindung betrifft eine Abdichtmasse auf Acrylatbasis und ein Verfahren zum Abdichten von Spalten.

Aus der EP 504 630 A ist zu dem dort vorbekannten Stand der Technik eine Stufenpolymerisation in Bezug auf Wasser (Latex) basierte Abdichtmassen beschrieben. Der Dichtstoff soll auch ausreagieren. Dies ist nicht günstig für eine Verarbeitung bei hohen Temperaturen. Die EP A 615 008 betrifft zwar Abdichtmassen und erwähnt Acrylatfasern als Thixotropiemittel. Jedoch ist dies schon keine Abdichtmasse mit einer Stufenpolymerisation.

Der Erfindung stellt sich die Aufgabe, eine Abdichtmasse zur Verfügung zu stellen, die insbesondere für enge Spalten sehr wirksam ist. Darüber hinaus auch die Aufgabe, ein Verfahren zum Abdichten von Spalten anzugeben. Diese Aufgabe ist bei den Ansprüchen 1 bzw. 4 gelöst.

Hinsichtlich der Dichtmasse ist von Bedeutung, dass das Acrylat, ein Copolymer, im Wege einer Stufenpolymerisation erhalten ist und mit einem Thixotropiemittel versehen ist. Das Molekulargewicht des Acrylat-Copolymers liegt im Bereich von 20000 bis 70000, bevorzugt im Bereich von 25000 bis 50000.

Überraschend ist damit eine Abdichtmasse zur Verfügung gestellt, die insbesondere für enge Spalten sehr wirksam ist. Die Abdichtmasse ist bei Raumtemperaturen annähernd fest, bei hoher Klebkraft, härtet jedoch nicht aus. Die Anhaftung des Abdichtmittels an Spaltbegrenzungswänden ist überraschend stark. Auch bei üblichen Raumtemperaturen bleibt eine Anhaftung bestehen. Es kommt nicht zum Abreißen der Abdichtmasse und damit etwa zu Kapillarbildungeh, in welche Flüssigkeit/wasser eindringen könnte.

Weiterhin ist mittels des Thixotropiemittels die Abdichtmasse bevorzugt so eingestellt, daß sie - erst - bei erhöhter Temperatur deutlich über 50° C, bevorzugt oberhalb von 100° C, fließfähig ist. Das Thixotropiemittel verbessert die Kaltfließeigenschaften und erhöht die Wärmestandfestigkeit. Es kann sich insbesondere auch um stereothixotropes Mittel handeln.

Das Thixotropiemittel ist seinerseits gleichfalls bevorzugt ein solches auf Acrylatbasis. Hierzu sind verschiedene Möglichkeiten im Stand der Technik bekannt. Das Molekulargewicht des Thixotropiemittels liegt im Bereich von 50000 bis 120000, bevorzugt im Bereich von 70000 bis 100000. Weiter bevorzugt ist das Molekulargewicht des Thixotropiemittels jedenfalls so ausgesucht, daß es jeweils höher ist als das Molekulargewicht des Acrylat-Copolymers der Dichtmasse. Das Thixopropiemittel weist darüber hinaus bevorzugt auch eine höhere Glasübergangstemperatur als das genannte Acrylat-Copolymer der Dichtmasse auf. Dies trägt zu einer vorteilhaft guten Temperaturstandfestigkeit bei. Das Thixotropiemittel erbringt in dem genannten Acrylat-Copolymer der Dichtmasse gleichsam eine armierende Wirkung.

Des weiteren betrifft die Erfindung ein Verfahren zum Abdichten von Spalten, wobei eine Dichtmasse auf Acrylatbasis, die durch Stufenpolymerisation erhalten ist, bei erhöhter Temperatur von über 50°, bevorzugt über 100° C, in einen Spalt eingebracht wird. Überraschend hät sich gezeigt, daß bei derartigem Abdichten von Spalten keine oder nur eine sehr geringe Vorbereitung der Spalte erforderlich ist. Insbesondere toleriert dieses Verfahren im Spalt noch befindliche Feuchtigkeit. Aufgrund der hohen Temperatur der Dichtmasse beim Eindringen in den Spalt wird Feuchtigkeit zugleich aus dem Spalt ausgetrieben.

Die Dichtmasse weist bevorzugt ein Thixotropiemittel auf, das weiter bevorzugt ein solches auf Acrylatbasis ist.

Hinsichtlich weiterer Eigenschaften des Acrylat-Copolymers und des genannten Thixotropiemittels wird darauf auch auf die weiter vorstehenden Ausführungen verwiesen.

Bei der Dichtmasse auf Acrylatbasis handelt es sich insgesamt bevorzugt um eine solche mit Molekulargewichten im Bereich von 25000 bis 60000. Durch die Mehrstufenpolymerisation wird ein Molekulargewichtsverlauf in einem sehr engen Spektrum erreicht.

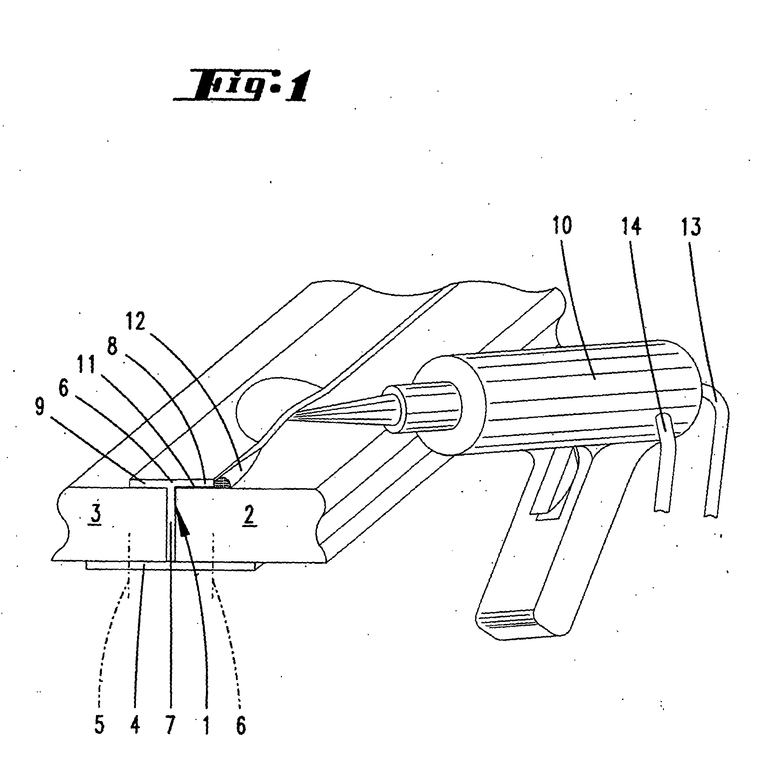

Nachstehend ist der Abdichtvorgang beispielhaft anhand der beigefügten Zeichnung erläutert.

Die einzige Figur der Zeichnung zeigt schematisch, teilweise im Schnitt und in der Perspektive, eine Fuge, die mit einem Fugenstreifen überdeckt ist und in welche Fuge die Dichtmasse eingebracht wird.

Dargestellt und beschrieben ist eine zwischen zwei Wandteilen 2, 3 ausgebildete Fuge 1, wobei die Wandteile 2,3 zunächst mechanisch, etwa durch einen schematisch angedeuteten Halterungsbügel 4, an Befestigungsstellen 5, 6 miteinander verbunden sind.

In die Fuge 1 ist ein T-förmiger Kunststoffstreifen 6 eingeführt, dessen vertikaler T-Abschnitt 7 in die Fuge 1 hineinragt, während die horizontalen T-Ansätze 8, 9 über die Länge der Fuge 1 die angrenzenden Wandteile 2, 3, auf deren Außenseite, überdecken.

Mittels einer aufheizbaren Spritzpistole 10 wird unter Anhebung eines horizontalen T-Abschnittes 8 Dichtmasse 11, wie im Querschnitt schematisch ersichtlich, sowohl in die eigentliche Fuge 1 wie auch auf den von dem T-Abschnitt 8 überdeckten sich anschließenden Oberflächenabschnitt des Wandteils 2 eingebracht. Die Spritzpistole 10 besitzt einen Hydraulikanschluß 13 und einen Elektroanschluß 14. Der Hydraulikanschluß 13 versorgt einen hydraulischen Auspreßstempel innerhalb der Spritzpistole, während der Elektroanschluß 14 die erforderliche Aufheizung, durch in der Spritzpistole verlegte Heizdrähte, ermöglicht.

Die eingebrachte Dichtmasse, die der vorstehend beschriebenen Spezifikation entspricht, wird bei Temperaturen von etwa 120° in dünnflüssigem Zustand eingebracht. Nach dem Einbringen ist in der Regel ein gewisser Anteil 12 der Dichtmasse außen aus der Fuge ausgequollen. Dieser kann nach Erkalten mittels eines Spachtels entfernt werden.

Die auf Raumtemperatur abgekühlte, nicht ausgehärtete Dichtmasse haftet sowohl an den den Fugenwänden und den Außenseiten der Wandteile zugewandten Flächen des T-förmigen kunststoffteiles wie auch an den Fugenwänden und Außenseiten der Wandteile 2, 3 selbst an. Und zwar in Form eines vergleichsweise dünnen Filmes. Wenn mm derartige Dichtungen wieder höheren Temperaturen ausgesetzt werden, kann es sein, daß die nicht ausgehärtete Dichtmasse wulstartig aus dem Spalt austritt. Es ist jedoch zu beobachten, daß nach nochmaligen Abkühlen die Dichtmasse sich dann auch von selbst in den Spalt wieder zurückzieht, der Wulst also wieder vollständig verschwindet.

## Patentansprüche

1. Abdichtmasse auf Acrylatbasis, wobei das Acrylat durch eine Stufenpolymerisation erhalten ist und mit einem Thixotropiemittel versehen ist, wobei weiter die Abdichtmasse bei Raumtemperatur fest ist und erst bei erhöhter Temperatur deutlich über 50° C, bevorzugt oberhalb von 100° C, fließfähig ist.

2. Abdichtmasse nach Anspruch 1, **dadurch gekennzeichnet, dass** das Thixotropiemitt auf Acrylatbasis gebildet ist.

3. Abdichtmasse nach einem der Ansprüche 1 oder 2, **dadurch gekennzeichnet, dass** die Abdichtmasse ein Molekulargewicht im Bereich von 25000 bis 60000 aufweist.

4. Verfahren zum Abdichten von Spalten, wobei eine Dichtmasse auf Acrylatbasis, die durch Stufenpolymerisation erhalten ist, bei erhöhter Temperatur von über 50°, bevorzugt über 100°, in den Spalt eingebracht - wird.

5. Verfahren nach Anspruch 4, **dadurch gekennzeichnet, dass** die Dichtmasse ein Thixotropiemittel enthält.

6. Verfahren nach einem der Ansprüche 4 oder 5, **dadurch gekennzeichnet, dass** das Thixotropiemittel auf Acrylatbasis gebildet ist.

## Claims

1. Sealing composition based on acrylate, wherein the acrylate is obtained by progressive polymerisation and is provided with a thixotropic agent, wherein also the sealing composition is solid at room temperature and is capable of flow only at elevated temperature significantly above 50°C, preferably above 100°C.

2. Sealing composition according to claim 1, **characterised in that** the thixotropic agent is formed on an acrylate base.

3. Sealing composition according to one of claims 1 or 2, **characterised in that** the sealing composition has a molecular weight in the range from 25,000 to 60,000.

4. Process for sealing gaps, wherein a sealing composition based on acrylate, which is obtained by progressive polymerisation, is introduced into the gap at elevated temperature of over 50°, preferably over 100°.

5. Process according to claim 4, **characterised in that** the sealing composition contains a thixotropic agent.

6. Process according to one of claims 4 or 5, **characterised in that** the thixotropic agent is formed on an acrylate base.

## Revendications

1. Une masse d'obturation à base d'acrylate, dans laquelle l'acrylate est obtenue par une polymérisation séquentielle et est associé à un agent thixotrope et dans laquelle, en outre, ladite masse d'obturation est à température ambiante à l'état solide et n'est à l'état fluide qu'à une température plus élevée, distinctement supérieure à 50°C, de préférence supérieure à 100°C.

2. La masse d'obturation selon la revendication 1, **caractérisée en ce que** l'agent thixotrope est à base d'acrylate.

3. La masse d'obturation selon l'une ou l'autre des revendications 1 ou 2, **caractérisée en ce que** ladite masse d'obturation présente un poids moléculaire compris entre 25000 et 60000.

4. Procédé de bouchage de fentes, dans lequel une masse d'obturation à base d'acrylate, obtenue par polymérisation séquentielle, est introduite dans la fente à une température supérieure à 50°C, de préférence supérieure à 100°C.

5. Procédé selon la revendication 4, **caractérisé en ce que** la masse d'obturation contient un agent thixotrope.

6. Procédé selon l'une ou l'autre des revendications 4 ou 5, **caractérisé en ce que** l'agent thixotrope est à basé d'acrylate.
